**Europäisches Patentamt**

**European Patent Office**

**Office européen des brevets**

(11) Publication number: **0 430 331 A1**

## EUROPEAN PATENT APPLICATION

(21) Application number: **90203023.8**

(22) Date of filing: **15.11.90**

(51) Int. Cl.5: **B01D 53/22, F02M 25/08**

(30) Priority: **23.11.89 NL 8902897**

(43) Date of publication of application:
**05.06.91 Bulletin 91/23**

(84) Designated Contracting States:
**AT BE CH DE ES FR GB GR IT LI LU NL SE
Bulletin 2**

(71) Applicant: **NEDERLANDSE ORGANISATIE
VOOR
TOEGEPAST-NATUURWETENSCHAPPELIJK
ONDERZOEK TNO
Postbus 297
NL-2501 BD Den Haag(NL)**

(72) Inventor: **Ter Meulen, Berend Philippus
Chamavenlaan 5
NL-7312 HE Apeldoorn(NL)**

(54) **Purification of air.**

(57) Method for removing organic compounds from air, such as hydrocarbons from air, polluted as a result of the use with cars, the air being guided along one side (3) of a membrane (4) and under the influence of a driving power, created by a liquid (9, 10) which flows along the other side (6) of the membrane and which has a great affinity to the compound to be removed. The liquid preferably is a silicone oil with such a vapour tension that the organic compound may be recovered from the liquid, either by heating, distilling and condensing, or by stripping the liquid with a stripping gas, suitable thereto. With automobiles the hydrocarbons may be supplied to the air, which is guided to the engine. The invention also comprises the device which is used in connection with automobiles.

Fig. 2

## PURIFICATION OF AIR.

The invention relates to a method for the removal of organic substances from air, the air being guided along one side of a membrane -the retentate-side - and under the influence of a driving power being able to permeate, to the other side of the membrane - the permeate side. Such organic substances are, for instance, solvents such as aliphatic and aromatic hydrocarbons, chlorinated hydrocarbons, freones and gasoline vapours.

Such a method is known, for instance from the American patent no. 4.553.983. There it is described how air, polluted with gaseous organic substances, is led along a semi-permeable membrane that features a permeability for organic substances, far higher than that of air. Between both sides of the membrane, a pressure difference is applied, in such a way that for the component to be removed, there is a difference in partial pressure in the direction of the back side, the so-called permeate side. This difference in partial pressure is the driving power for the transport of the component to be removed through the membrane, in the direction of the permeate side. In combination with the permeability which is higher for the pollution to be removed than for air - the ratio of the permeabilities is called: division factor - this results in that the component to be removed permeates to the back side and the purified air, the retentate, flows along the front side. With a high division factor, for instance over 50, the permeate can contain such high concentrations of the pollution, that this can be recovered well by means of known techniques such as condensation.

In the patent mentioned, it is also indicated which types of membranes can be used. Elastomeric - rubbery - membranes are to be preferred, but non-elastomeric membranes can also be used. An advantage of the elastomeric membranes is that various organic solvents solve very well in them. In order to remove a particular component, often a particular membrane, which functions well in combination with the component, will be chosen.

In general, the difference in partial pressure meant here is obtained by a high under-pressure, for instance a vacuum at the permeate side. For this, relatively heavy equipment is necessary, like a vacuum pump or a compressor. In many cases where one would want to apply the method mentioned above, because of lack of space it however is not possible to realize the recovery of the pollution at the same place where it is separated from the air - at the so-called membrane modulus. This is particularly often the case when pollution has to be removed from small air flows and in general, when the method is applied on a small scale. An example of this is the removal and recovery from air of hydrocarbon vapours, which are released by dislodgment from a storage tank when it is filled with liquid hydrocarbons, like loading petrol in a car at a petrol station.

In such a case, dividing the equipment into a recovers part - the membrane modulus - and a vacuum part, at a distance, seems to offer a solution. However: in the pipes to be used, too great a pressure drop will occur, because of which this solution cannot be realized very well.

The invention aims at supplying a solution for the problem mentioned. The method according to the invention therefore shows the characteristic that along the permeate side of the membrane, a liquid flows which has a great affinity to the matter to be removed.

When applying the method according to the invention, the difference in partial pressure as a driving power for the transportation of the substance to be removed is not created by a pressure difference but by the very low partial pressure of the matter to be removed in the liquid phase in relation to that in the gas phase (the matter to be removed can dissolve in the liquid flowing behind the membrane). The flow of liquid replaces the vacuum, as it were.

In principle, several liquids can be used for removing organic components from air. For particular components, often particular liquids, having an extra high affinity to that particular component, are used advantageously. Of course the liquid must not affect the membrane and preferably it has a low vapour tension at working temperature.

As examples of the liquids to be used in this respect, polybutadenes and similar polymeric liquids can be mentioned. However: in order to remove an organic component from air, a liquid can be used; particularly oil yields good results. This can be a mineral, a vegetable, an animal or a synthetical oil. The oil concerned, for instance silicone oil, which shows the desired affinity to for instance hydrocarbons, can be regenerated apart from the membrane modulus, for instance by heating. Through the - closed - gas separation membrane, the oil cannot contact the air directly, and therefore cannot pollute the air.

When so-called composite membranes (which consist of a microporous bottom layer and a selective top layer) are used, the embodiment is preferably such, that the liquid flows along the top layer and the air flows along the bottom layer.

As mentioned above, it is often desirable to recover a hydrocarbon which is removed from air.

In order to make this process 'remunerative', several demands have to be met: the concentration of the hydrocarbon in the liquid must be sufficiently high and the division must be realizeable in a simple way.

Characteristic of such a method is, according to the invention, that a liquid is used, having a vapour tension differing from the vapour tension of the organic substance, and that the organic substance is recovered from the liquid by means of known techniques. Then, as an example and according to a preferred embodiment of the invention, by means of a simple temperature rise, the division can occur with the help of distillation - whether at lowered pressure or not. The hydrocarbons then transform to vapour phase and can, if so desired, be recovered after condensation, in liquid state. Apart from this method of division, other known methods for dividing organic substances can be applied.

A further preferred embodiment of such a method is, according to the invention, one in which the organic substance is 'stripped' from the liquid by means of a stripping gas having a vapour tension of its organic component which is lower than that of the organic component in the liquid. This 'stripping' can be done by means of a direct contact between the air or the gas-flows and the liquid - for instance the silicone oil. Preferably however, the stripping is done with air or an inert gas, which via a membrane is brought in contact with the liquid.

The method last mentioned, according to the invention, is successfully applied for the purification of air, polluted with hydrocarbons as a result of the use of automobiles, the subsequent recovery of these hydrocarbons and the insertion of these in the air supplied to the engine for combustion.

Emission of hydrocarbons from automobiles can occur:
- when loading petrol, because of dislodgement of the petrol-vapour-saturated air in the tank;
- when driving, because of evaporization of petrol from the tank and the engine system;
- when standing still after driving, because of evaporization from the carburator because of the absorption of remaining engine heat and temperature changes of the air outside.

The accumulated total of these emissions can amount to about 1% of the amount of petrol used. By yet supplying these vapours to the engine, a genuine saving is realized. The petrol tank en the carburator system have to be ventilated by means of a membrane module as meant here. The petrol-vapours resident in the air are then absorbed in a silicon oil flow via the membrane in the module. This oil flow is then led to a second module, in which the petrol-vapours absorbed in the oil are emitted again, via a membrane, to the flow of combustion air to be supplied to the engine. Emission to the atmosphere is thus prevented and a saving of petrol is realized.

The invention also includes the equipment for executing the method mentioned above and in particular the device to be used for motor vehicles, characterized in that it contains two membrane modules, one module for absorbing the hydrocarbons in a liquid and one module for emitting the hydrocarbons from the liquid, the absorption module being installed relatively far from the engine, the emission module relatively close to it.

The second module - for the emmission of the petrol - can then be heated - by engine heat or separately - and function at a higher temperature level than the first, absorption module. Because of the higher temperature of the second module, the emission of petrol-vapours to the flow of combustion air is stimulated.

The invention will be explained further by means of three examples of the method according to the invention.

## Example 1

From an air flow of 40 liters per hour, polluted with 10% (volume percentage) hexane, the hexane had to be removed. The airflow thereto was led through a membrane modulus, consisting of 100 hollow, microporous fibres with an inside diameter of 0.6 mm and an outside diameter of 1 mm and on the outside a thin (about 10 $\mu$m) layer of polydimethylsiloxane (PDMS). The total membrane surface per modulus was about 470 cm$^2$. Around the fibres, silicon oil was led with a molecular weight of 500 D. The speed of flow of the oil through the modulus was about 0.4 liters/hour.

The result was, that in the air flowing out, there was still about 1 vol.%, or less hexane.

## Example 2

Through the same membrane modulus as used in example 1, around the fibres a paraffinic oil with a viscosity of about 75 mPa.s was led. The speed of flow of the oil through the modulus was about 0.6 liters/hour. Through the fibres, an air flow of 60 liters/hour, polluted with 10 vol.% hexane was led.

The result was that in the air flowing out, there was 1 vol.% or less hexane.

## Example 3

Note example 2, now applied to an air flow of 60 liters/ hour, containing 10 vol.% 1. 1.1.-tri-chlorine ethane.

The result was that more than 90% of the 1.1.

1.-tri-chlorine ethane was removed.

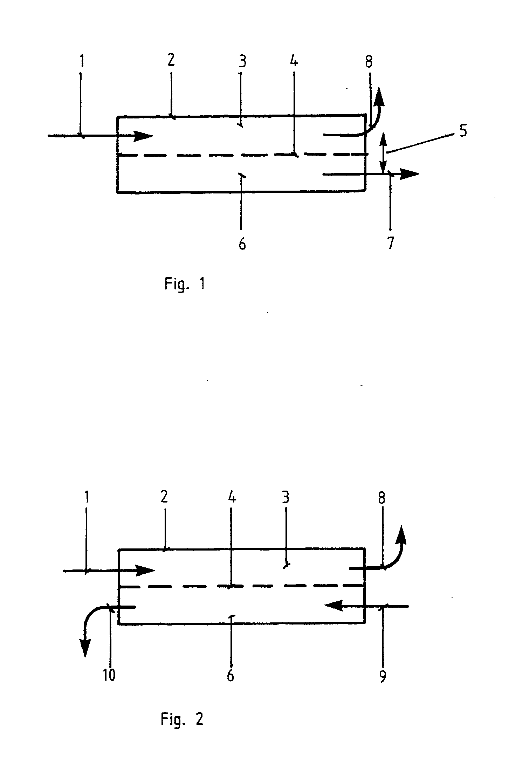

As a further explanation of the invention there is a drawing, in which it is shown schematically how the known method was embodied -Fig. 1; and how the method according to the invention is embodied -Fig. 2.

In Fig. 1, 1 is the polluted flow of air, which is led into the membrane modulus 2, on the retentate side 3 of the membrane 4. By means of the driving power, caused by the pressure difference 5 between retentate side 3 and permeate side 6, the pollution from the air flow 1 goes through the membrane 4 to the permeate side 6 and from there is transported 7 so it can be recovered if needed. The purified air flow 8 flows out of the modulus.

Fig. 2 shows how a similar air flow 1 in the modulus 2 flows along the retentate side 3 of the membrane 4. Along the permeate side 6 now flows, in accordance with the method according to the invention, a flow of silicon oil, which has a great affinity to the substance to be removed from the air. This flow of oil replaces the pressure difference 5 and causes the driving power which leads the substance to be removed through the membrane. From right to left in the drawing, the concentration in the oil of the substance to be removed increases and the oil containing the pollution, flows out of modulus 2. The purified air 8 leaves the modulus on the retentate side 3.

In actual practice, for the embodiment of this method, a modulus with flat membranes can be used, as well as a modulus with so-called hollow fibres.

## Claims

1. Method for removing organic substances from air, the air being guided along one side of a membrane - the retentate side - and under the influence of a driving power having been able to permeate to the other side of the membrane - the permeate side, characterized in that along the permeate side of the membrane, a liquid flows, which has a great affinity to the substance to be removed.

2. Method according to claim 1, characterized in that the liquid is oil.

3. Method according to claim 2, characterized in that the oil is a silicone oil.

4. Method according to claims 1, 2 or 3, the membrane being a composite membrane, with a microporous bottom layer and a selective top layer, characterized in that the liquid flows along the top layer and the air flows along the bottom layer.

5. Method according one of the previous claims, the organic substance being recovered from the liquid after being removed from the air by means of the liquid,

characterized in that a liquid is used having a vapour tension differing from that of the organic substance, and that, using this, the organic substance is recovered from the liquid with in itself known techniques.

6. Method according to claim 5, characterized in that the technique mentioned in claim 5 is 'heating', after which distillation and at last condensation take place.

7. Method according to claim 5, characterized in that the organic substance is 'stripped' from the liquid by means of a stripping gas having a partial vapour tension of its organic component which is lower than that of the organic component in the liquid.

8. Method according to claim 7, characterized in that that the stripping takes place by means of air / an inert gas, which is brought in contact with the liquid via a membrane.

9. Method according to claim 8, characterized in that it is applied for the purification of air polluted with hydrocarbons as a result of the use of automobiles, the subsequent recovery of these hydrocarbons and the insertion of these into the air to be supplied to the engine for combustion.

10. Device for the execution of the method of the method according to claim 9, characterized in that that it contains two membrane modules, one module for the absorption of the hydrocarbons in a liquid and one module for the emission of the hydrocarbons from the liquid, the absorption module being installed relatively far from the engine, the emission module close to it.

Fig. 1

Fig. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 025 256 (MITSUBISHI)<br>* Claim 1; page 3, lines 20-58 *<br>— — — | 1-4 | B 01 D<br>53/22<br>F 02 M 25/08 |
| A | EP-A-0 221 571 (TVT THEISEN VERFAHRENSTECHNIK)<br>* Claim 1 *<br>— — — | 1-7 | |
| A | US-A-4 174 374 (S. MATSON)<br>* Abstract; figure 1 *<br>— — — | 1-4 | |
| A | US-A-4 516 984 (J. WARNER)<br>* Abstract; figure 1c *<br>— — — | 1-4 | |
| A | GB-A-1 440 963 (Ch. SKARSTROM)<br>* Claims 1-15 *<br>— — — | 1-4 | |
| A | EP-A-0 247 585 (NIPPON KOKAN)<br>* Figure 1 *<br>— — — | 1-4 | |
| A,D | US-A-4 553 983 (R. BAKER)<br>— — — | 1-4 | |
| A | DE-U-8 702 074 (H.-J. SCHWEFER)<br>* Claims 1-11; fig. *<br>— — — | 9 | TECHNICAL FIELDS SEARCHED (Int. Cl.5) |
| A | EP-A-0 288 090 (BOSCH)<br>* Claim 1; figure 2 *<br>— — — — — | 9 | B 01 D<br>F 02 M |

The present search report has been drawn up for all claims

| Place of search | Date of completion of search | Examiner |
|---|---|---|
| The Hague | 26 February 91 | KANOLDT W.W. |